(19) Europäisches Patentamt / European Patent Office / Office européen des brevets

(11) **EP 3 620 940 A1**

(12) **EUROPEAN PATENT APPLICATION**
published in accordance with Art. 153(4) EPC

(43) Date of publication:
**11.03.2020 Bulletin 2020/11**

(51) Int Cl.:
***G06F 17/30*** (2006.01)

(21) Application number: **18814267.3**

(22) Date of filing: **06.06.2018**

(86) International application number:
**PCT/CN2018/090138**

(87) International publication number:
**WO 2018/223992 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.06.2017 CN 201710423859**

(71) Applicant: **Alibaba Group Holding Limited Grand Cayman (KY)**

(72) Inventors:
• **CHANG, Xiaofu**
  **Hangzhou**
  **Zhejiang 311121 (CN)**

• **CHAO, Linlin**
  **Hangzhou**
  **Zhejiang 311121 (CN)**
• **XU, Peng**
  **San Mateo**
  **California 94402 (US)**
• **LI, Xiaolong**
  **Hangzhou**
  **Zhejiang 311121 (CN)**

(74) Representative: **Finnegan Europe LLP**
  **1 London Bridge**
  **London SE1 9BG (GB)**

(54) **DIALOGUE GENERATION METHOD AND APPARATUS, AND ELECTRONIC DEVICE**

(57) A dialog generation method, apparatus, and electronic device are disclosed in this application. The method includes training a sequence to sequence (seq2seq)-based dialog model using a loss function including topic range constraint information; and generating a dialog using the trained dialog model. With embodiments of this application, topic range constraint information is introduced in the process of dialog model training using a loss function including the topic range constraint information, thus helping to prevent the trained model from producing low-quality meaningless replies.

S101

Train a sequence to sequence (seq2seq)-based dialog model using a loss function including topic range constraint information

S102

Generate a dialog using the trained dialog model

**FIG. 1**

## Description

### Technical Field

This application relates to the field of computer software technologies, and in particular, to a dialog generation method, apparatus, and electronic device.

### Technical Background

With the rapid development of mobile devices, smart assist related applications have become increasingly common. For example, an increasingly popular dialog assistant can dialogue with a user based on voice, text, or other forms to answer questions raised by the user, or simply chat with the user.

In the prior art, questions and answers in a dialog process are regarded as mapping of a question language symbol sequence to an answer language symbol sequence, and a sequence to sequence (seq2seq)-based dialog model is trained using a large amount of manual dialog data with the maximum likelihood estimation as a loss function, so that the dialog model learns a mapping relationship between the question language symbol sequence and the answer language symbol sequence, and dialogs can be automatically generated by the trained dialog model, thereby implementing the dialog assistant.

However, the prior art is susceptible to high frequency reply statements without topic information such as "ok," "yes," and "got it" during the model training, resulting in a tendency to produce these low-quality meaningless replies when the trained model is actually used.

### Summary of the Invention

A dialog generation method, apparatus, and electronic device are provided in embodiments of this application, for solving the following technical problem: the prior art is susceptible to high frequency reply statements without topic information during dialog model training, resulting in a tendency to produce these low-quality meaningless replies when the trained model is actually used.

To solve the above technical problem, the embodiments of this application are implemented as follows.

A dialog generation method provided in the embodiments of this application comprises:

training a seq2seq-based dialog model using a loss function including topic range constraint information; and generating a dialog using the trained dialog model.

A dialog generation apparatus provided in the embodiments of this application comprises:

a training module configured to train a seq2seq-based dialog model using a loss function including topic range constraint information; and
a generation module configured to generate a dialog using the trained dialog model.

An electronic device provided in the embodiments of this application comprises:

at least one processor; and
a memory in communication connection with the at least one processor, wherein
the memory stores an instruction executable by the at least one processor, and when executed by the at least one processor, the instruction enables the at least one processor to:

train a seq2seq-based dialog model using a loss function including topic range constraint information; and
generate a dialog using the trained dialog model.

At least one of the above technical solutions adopted in the embodiments of this application can achieve the following beneficial effects: topic range constraint information is introduced in the process of dialog model training using a loss function including the topic range constraint information, thus helping to prevent the trained model from producing low-quality meaningless replies. Therefore, the problem in the prior art can be partially or wholly solved.

### Brief Description of the Drawings

In order to illustrate the technical solutions in the embodiments of this application or in the prior art more clearly, the accompanying drawings used in descriptions of the embodiments or the prior art will be briefly described below. It is apparent that the accompanying drawings in the following description are only some embodiments recorded in this application, and other accompanying drawings can also be obtained by those of ordinary skill in the art according to these accompanying drawings without creative efforts.

FIG. 1 is a schematic flowchart of a dialog generation method according to an embodiment of this application;

FIG. 2 is a schematic principle diagram of a seq2seq-based dialog model;

FIG. 3 is a schematic principle diagram of a specific implementation solution of dialog model training in the method of FIG. 1 according to an embodiment of this application;

FIG. 4 is a general schematic flowchart of principles in FIG. 3 according to an embodiment of this application; and

FIG. 5 is a schematic structural diagram of a dialog generation apparatus corresponding to FIG. 1 according to an embodiment of this application.

**Detailed Description**

A dialog generation method, apparatus, and electronic device are provided in the embodiments of this application.

To enable those skilled in the art to better understand the technical solutions of this application, the technical solutions in the embodiments of this application will be described clearly and completely below with reference to the accompanying drawings in the embodiments of this application. Obviously, the described embodiments are only a part rather than all of the embodiments of this application. All other embodiments derived by those of ordinary skill in the art based on the embodiments of this application without creative efforts should fall within the protection scope of this application.

For ease of understanding, the core idea of the solution of this application is illustrated. In this application, a seq2seq-based dialog model is trained using a loss function including topic range constraint information based on topic reply consistency, thus preventing the trained model from producing a low-quality meaningless dialog. The topic range constraint information may specifically be at least part of a formula included in the loss function, and the at least part of the formula is referred to as a topic range constraint function hereinafter.

The topic reply consistency mainly refers to that, in real human conversation chat, dialog topics of chat participants are often the same or related, and a topic range of reply statements is also limited correspondingly. For example, A mentions a weather-related discourse, and it is reasonable for B to reply with a statement of a weather-related topic. Generally, B will not reply with content that has nothing to do with the weather topic, such as "what about this mobile phone?"

A dialog model is generally configured to simulate dialogs between real people and users, and thus it will be a better experience for the user if the dialog model can generate a dialog following the topic reply consistency.

Based on the above core idea, the solution of this application is described in detail below.

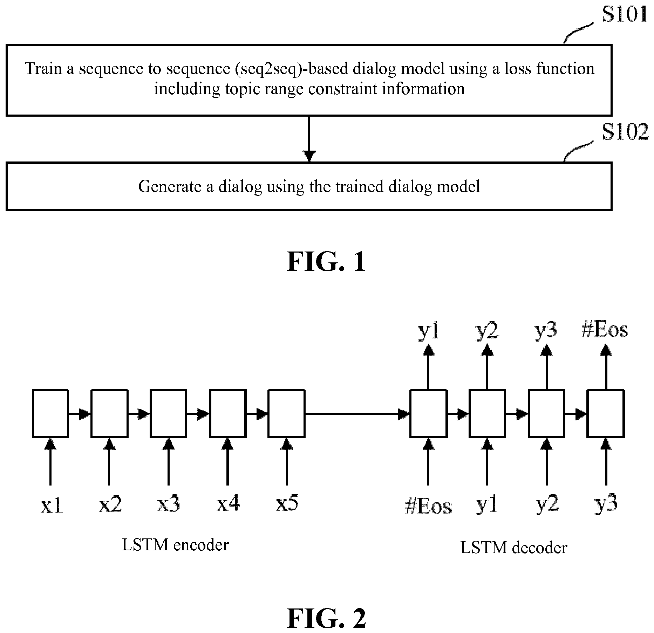

FIG. 1 is a schematic flowchart of a dialog generation method according to an embodiment of this application. From the perspective of a program, the process may be executed by a program on a server or a terminal, such as a model training program, a dialog assistant application, an instant messaging application, and the like. From the perspective of a device, the process is executed by, but is not limited to, at least one of the following devices that can serve as a server or a terminal: a mobile phone, a tablet computer, a smart wearable device, an on-board computer, a personal computer, a medium computer, a computer cluster, and the like.

The process in FIG. 1 may include the following steps.

In S101, a seq2seq-based dialog model is trained using a loss function including topic range constraint information.

In the embodiment of this application, the topic range constraint information may be one or more parameters related to a dialog topic in the loss function, or may be at least part of a formula related to the topic in the loss function.

In the training process of the dialog model, parameters in the dialog model are adjusted according to the loss calculated based on the loss function, and the topic range constraint information included in the loss function also has corresponding influences on adjustment of the parameters in the dialog model, such that the content of an output sequence of the trained dialog model is also constrained accordingly.

This constraint may have two effects: firstly, the output sequence is enabled to include topic information, rather than a low-quality meaningless dialog; and secondly, the output sequence is enabled to achieve topic reply consistency with an input sequence of the corresponding dialog model.

In S102, a dialog is generated using the trained dialog model.

In the embodiment of this application, step S102 may be an action in the process of dialog model training, or an action actually used after completion of the dialog model training.

For example, the trained dialog model is applied to a dialog assistant application. The dialog model receives a statement input by a user and outputs a reply statement; or the dialog model may output a reply statement based on a preset or automatically generated input statement; or the dialog model may directly output a preset statement without depending on an input statement; and so on.

The actions involved in FIG. 1 may be executed by the same device or program, or by different devices or programs. For example, steps S101 to S102 are both executed by the dialog assistant application. For another example, step S101 is executed by a model training program, and step S102 is executed by the dialog assistant application; and so on.

With the method of FIG. 1, topic range constraint information is introduced in the process of dialog model training using a loss function including the topic range constraint information, thus helping to prevent the trained model from producing low-quality meaningless replies. Therefore, the problem in the prior art can be partially or wholly solved.

Based on the method of FIG. 1, some specific implementation solutions and expansion solutions of the method are further provided in the embodiments of this application and illustrated below.

FIG. 2 is a schematic principle diagram of a seq2seq-based dialog model.

The dialog model in FIG. 2 includes two Long Short-Term Memory (LSTM) recurrent neural networks. The first one is used as an encoder responsible for processing an input dialog word sequence *X*, and the second one is used as a decoder responsible for generating a reply word sequence *Y*. In an actual application, a loss function (i.e., an objective function) of the seq2seq-based dialog model generally adopts Maximum Likelihood Estimate (MLE), as shown in the following formula 1:

$$Cost = logp\ (Y\,|\,X);\ \text{Formula 1}$$

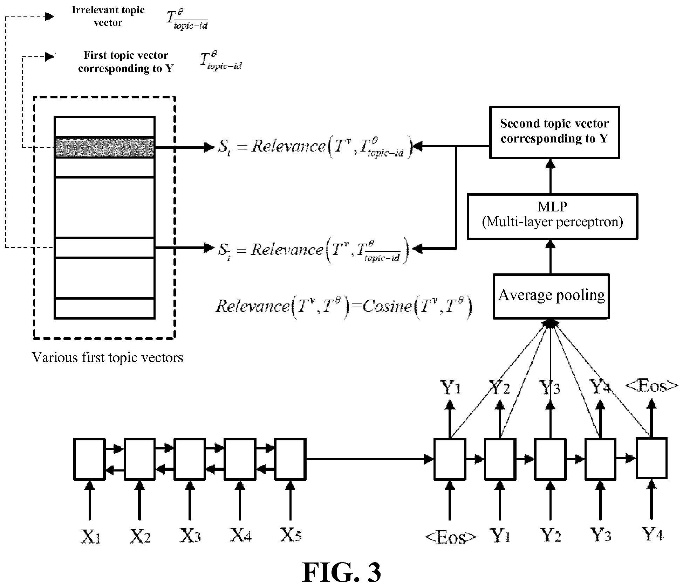

In the embodiment of this application, a topic range constraint function may be added to Formula 1, and then used for training the dialog model in FIG. 2. Definitely, if the MLE is not adopted, Formula 1 can be replaced correspondingly. Illustration is made with reference to FIG. 3 still by taking the MLE as an example.

FIG. 3 is a schematic principle diagram of a specific implementation solution of dialog model training in the method of FIG. 1 according to an embodiment of this application. As can be seen, compared with FIG. 2, the topic range constraint function and a corresponding loss calculation action are added in FIG. 3. The principles in FIG. 3 are illustrated below.

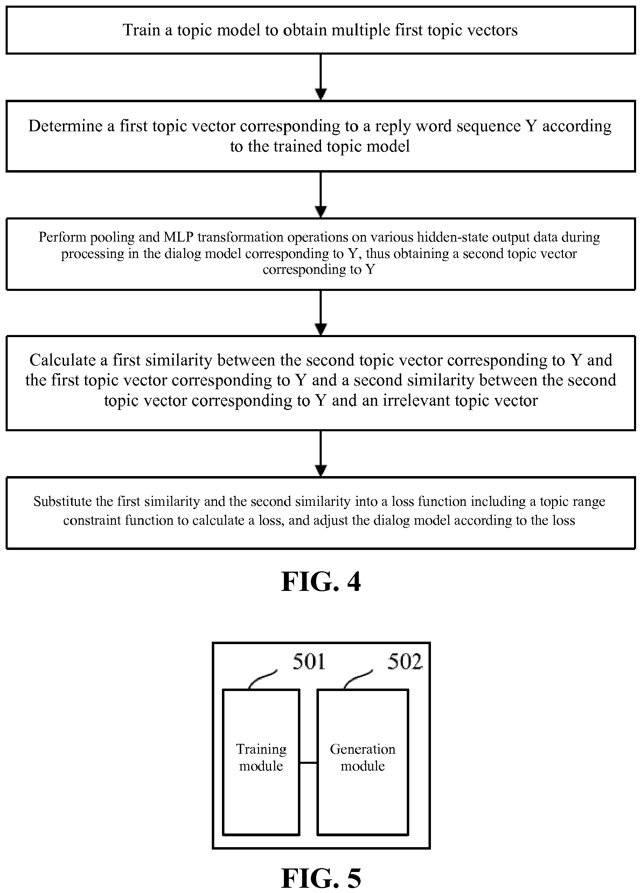

FIG. 4 is a general schematic flowchart of principles in FIG. 3 according to an embodiment of this application. The general flowchart is mainly divided into five parts.

A topic model is trained to obtain multiple first topic vectors.

A first topic vector (denoted as: $T^{\theta}_{topic-id}$ ) corresponding to the reply word sequence *Y is* determined according to the trained topic model.

Pooling and MLP transformation operations are performed on various hidden-state output data during processing in the dialog model corresponding to *Y*, thus obtaining a second topic vector (denoted as: $T^{y}$) corresponding to *Y*.

A first similarity (denoted as: $S_t = Relevance\ (T^y, T^{\theta}_{topic-id})$ ) between the second topic vector corresponding to *Y* and the first topic vector corresponding to *Y* and a second similarity (denoted as: $S_{\bar{t}} = Relevance\ (T^y, T^{\theta}_{\overline{topic-id}})$ ) between the second topic vector corresponding to *Y* and an irrelevant topic vector (denoted as: $T^{\theta}_{\overline{topic-id}}$ ) are calculated, where *Relevance*( ) denotes a similarity calculation function, such as a cosine similarity function *Cosine*( ).

The first similarity and the second similarity are substituted into the loss function including the topic range constraint function to calculate a loss, and the dialog model is adjusted according to the loss.

Further illustration is made as follows.

First, a topic model is trained in an unsupervised manner using a dialog training corpus. The topic model may be, for example, a Latent Dirichlet Allocation (LDA) model, a Kmeans model, or the like. By training the topic model, multiple topics can be extracted from the dialog training corpus, and multiple topic vectors are generated correspondingly, which are referred to as first topic vectors each representing a topic. Topic IDs can be used to identify the first topic vectors. Preferably, the first topic vector may be a dense vector similar to word embedding, wherein the word embedding refers to converting a word into a word vector.

Then, according to the trained topic model, a first topic vector corresponding to the reply word sequence *Y* can be obtained. Assuming that there is only one central meaning in one sentence, *Y* only corresponds to one topic ID, and corresponds to only one first topic vector correspondingly.

After that, hidden-state output data of *Y* during each step of the LSTM modeling is input for average pooling, and then transformed by a Multi-layer Perceptron (MLP) to obtain another topic vector expression of Y, which is referred to as a second topic vector corresponding to *Y*. The MLP may specifically be a multi-layer neural network, such as fully connected Deep Neural Networks (DNNs), etc.

It can be considered that the second topic vector corresponding to *Y* should be similar to the first topic vector corresponding to *Y* in the semantic space, compared to a first topic vector corresponding to another irrelevant topic ID. Based on such consideration, a loss function including topic range constraint information is defined in this application, which, for example, is as shown in Formula 2 below:

$$Cost' = log\, p\, (Y \mid X) + \lambda * log(1 + e^{-(S_t - S_{\bar{t}})}); \text{Formula 2}$$

where $\lambda$ is a weight coefficient, $S_t$ represents a similarity between the second topic vector corresponding to *Y* and the first topic vector corresponding to *Y,* and $S_{\bar{t}}$ represents a similarity between the second topic vector corresponding to *Y* and an irrelevant topic vector. The irrelevant topic vector is a vector among the first topic vectors other than the first topic vector corresponding to *Y*, and a topic corresponding to the irrelevant topic vector is irrelevant to the topic corresponding to *Y*.

The similarity may be, for example, a cosine similarity, or data that can measure the similarity between vectors, such as a distance between vectors.

Finally, based on Formula 2, the corresponding loss may be calculated and the dialog model may be adjusted. As a result, the dialog model can be repeatedly trained using multiple training samples until the training converges.

It should be noted that the specific implementation solution in FIG. 3 is only an example. Based on the example of FIG. 3, some key steps involved in the training are further illustrated below.

In the embodiment of this application, for step S102, a step of training a topic model using a dialog training corpus to obtain multiple first topic vectors each representing a topic may be further performed before training the seq2seq-based dialog model.

In the example of FIG. 3, the topic model is trained in an unsupervised manner, which is advantageous in that the training can be efficiently performed with a large amount of dialog training corpus, without the need of manually adding topic labels to the dialog training corpus. Therefore, the cost can be reduced and it is not easy to miss topics. Definitely, the topic model may also be trained in a supervised manner.

In the embodiment of this application, for step S102, the training the seq2seq-based dialog model using the loss function including the topic range constraint information may specifically include:

inputting a training sequence into the seq2seq-based dialog model for processing to obtain various hidden-state output data output during the processing and an output sequence obtained after the processing; generating a second topic vector corresponding to the output sequence according to the various hidden-state output data; inputting the output sequence into the trained topic model for processing to obtain a first topic vector corresponding to the output sequence among the multiple first topic vectors; calculating a loss using the loss function including topic range constraint information according to the first and second topic vectors corresponding to the output sequence; and adjusting the dialog model according to the loss.

In the example of FIG. 3, the training sequence is *X,* and the output sequence is *Y*.

Further, the generating a second topic vector corresponding to the output sequence according to the various hidden-state output data may have a variety of specific implementation manners.

For example, the manner in the example of FIG. 3 is: pooling the various hidden-state output data; and inputting data obtained after the pooling into an MLP for processing to obtain the second topic vector corresponding to the output sequence. The pooling specifically takes average pooling as an example, without excluding the possibility of using another pooling manner other than the average pooling.

In addition, the various hidden-state output data may be mapped in another set mapping manner other than using the MLP to obtain the second topic vector corresponding to the output sequence.

Further, the calculating a loss using the loss function including topic range constraint information according to the first and second topic vectors corresponding to the output sequence may specifically include:

calculating a first similarity between the second topic vector corresponding to the output sequence and the first topic vector corresponding to the output sequence; calculating a second similarity between the second topic vector corresponding to the output sequence and an irrelevant topic vector, wherein the irrelevant topic vector is a vector in the multiple first topic vectors other than the first topic vector corresponding to the output sequence; and substituting the first similarity and the second similarity into the loss function including topic range constraint information to calculate the loss, wherein the topic range constraint information is a formula including parameters corresponding to the first similarity and the second similarity.

In the example of FIG. 3, the parameter corresponding to the first similarity is $S_t$, the parameter corresponding to the second similarity is $S_{\bar{t}}$, the loss function including the topic range constraint information is Formula 2, and the topic range constraint information is $\lambda * log(1 + e^{-(S_t - S_{\bar{t}})})$.

It should be noted that Formula 2 is exemplary, and other loss functions including the topic range constraint information other than Formula 2 may be constructed based on the parameters $S_t$ and/or $S_{\bar{t}}$. In general, for the topic range constraint information including the parameters $S_t$ and $S_{\bar{t}}$, the greater $S_t$ is compared with $S_{\bar{t}}$, the smaller the loss portion corresponding to the topic range constraint information in the calculated loss is.

A dialog generation method according to the embodiment of this application is described above. Base on the same invention idea, a corresponding apparatus is further provided in an embodiment of this application, as shown in FIG. 5.

FIG. 5 is a schematic structural diagram of a dialog generation apparatus corresponding to FIG. 1 according to an embodiment of this application. The apparatus may be located on the executive body of the process in FIG. 1, including:

a training module 501 training a seq2seq-based dialog model using a loss function including topic range constraint information; and
a generation module 502 generating a dialog using the trained dialog model.

Optionally, before training the seq2seq-based dialog model, the training module 501 further trains a topic model using a dialog training corpus to obtain multiple first topic vectors each representing a topic.

Optionally, the training module 501 training a seq2seq-based dialog model using a loss function including topic range constraint information specifically includes:

the training module 501 inputting a training sequence into the seq2seq-based dialog model for processing to obtain various hidden-state output data output during the processing and an output sequence obtained after the processing;
generating a second topic vector corresponding to the output sequence according to the various hidden-state output data;
inputting the output sequence into the trained topic model for processing to obtain a first topic vector corresponding to the output sequence among the multiple first topic vectors;
calculating a loss using the loss function including topic range constraint information according to the first and second topic vectors corresponding to the output sequence; and
adjusting the dialog model according to the loss.

Optionally, the training module 501 generating a second topic vector corresponding to the output sequence according to the various hidden-state output data specifically includes:

the training module 501 pooling the various hidden-state output data; and
inputting data obtained after the pooling into an MLP for processing to obtain the second topic vector corresponding to the output sequence.

Optionally, the training module 501 calculating a loss using the loss function including topic range constraint information according to the first and second topic vectors corresponding to the output sequence specifically includes:

the training module 501 calculating a first similarity between the second topic vector corresponding to the output sequence and the first topic vector corresponding to the output sequence;
calculating a second similarity between the second topic vector corresponding to the output sequence and an irrelevant topic vector, wherein the irrelevant topic vector is a vector in the multiple first topic vectors other than the first topic vector corresponding to the output sequence; and
substituting the first similarity and the second similarity into the loss function including topic range constraint information to calculate the loss, wherein the topic range constraint information is a formula including parameters corresponding to the first similarity and the second similarity.

Based on the same invention idea, a corresponding electronic device is further provided in the embodiments of this application, including at least one processor; and
a memory in communication connection with the at least one processor, wherein
the memory stores an instruction executable by the at least one processor, and when executed by the at least one processor, the instruction enables the at least one processor to:

train a seq2seq-based dialog model using a loss function including topic range constraint information; and generate a dialog using the trained dialog model.

Based on the same invention idea, a corresponding non-volatile computer storage medium storing a computer executable instruction is further provided in an embodiment of this application. The computer executable instruction is configured to:

train a seq2seq-based dialog model using a loss function including topic range constraint information; and generate a dialog using the trained dialog model.

Various embodiments in this specification are described progressively. The same or similar parts between the embodiments may be referenced to one another. In each embodiment, the part that is different from other embodiments is mainly described. Particularly, the embodiments of the apparatus, electronic device and non-volatile computer storage medium are described in a relatively simple manner because they are basically similar to the method embodiment, and for related parts, reference can be made to the parts described in the method embodiment.

The apparatus, electronic device, and non-volatile computer storage medium according to the embodiments of this application are corresponding to the method. Therefore, the apparatus, electronic device, and non-volatile computer storage medium also have beneficial technical effects similar to those in the corresponding method. The beneficial technical effects of the method have been described in detail above, and thus the beneficial technical effects of the corresponding apparatus, electronic device and non-volatile computer storage medium are not elaborated here.

In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it cannot be assumed that the improvement of a method procedure cannot be implemented by using a hardware entity module. For example, a Programmable Logic Device (PLD) (for example, a Field Programmable Gate Array (FPGA)) is such an integrated circuit, and logic functions thereof are determined by a user programming device. Designers program by themselves to "integrate" a digital system into a PLD, without having a chip manufacturer to design and manufacture a dedicated integrated circuit chip. Moreover, at present, the programming is mostly implemented by using "logic compiler" software, instead of manually manufacturing an integrated circuit chip. The software is similar to a software complier for developing and writing a program, and original codes before compiling also need to be written in a specific programming language, which is referred to as a Hardware Description Language (HDL). There are not just one, but many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art also should know that a hardware circuit for implementing the logic method procedure may be easily obtained only by slightly logically programming the method procedure using the above several hardware description languages and programming the method procedure into an integrated circuit.

A controller may be implemented in any suitable manner. For example, the controller may be in the form of a microprocessor or a processor and a computer-readable medium storing computer-readable program codes (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 625D, Atmel AT91SAM, Microchip PIC18F26K20, and Silicone Labs C8051F320. A memory controller may also be implemented as a part of control logic of a memory. Those skilled in the art also know that, in addition to implementing the controller by using pure computer-readable program codes, the method steps may be logically programmed to enable the controller to implement the same function in the form of a logic gate, a switch, an application specific integrated circuit, a programmable logic controller and an embedded microcontroller. Therefore, such a controller may be considered as a hardware component, and apparatuses included therein and configured to implement various functions may also be considered as structures inside the hardware component. Alternatively, further, the apparatuses configured to implement various functions may be considered as both software modules for implementing the method and structures inside the hardware component.

The system, apparatus, module or unit illustrated in the foregoing embodiments can be implemented by a computer chip or an entity, or implemented by a product having a specific function. A typical implementation device is a computer. For example, the computer may be a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, the apparatus is divided into various units based on functions, and the units are described separately. Definitely, in an implementation of this specification, functions of various units can also be implemented in one or more pieces of software and/or hardware.

Those skilled in the art should understand that the embodiments of the present invention may be provided as a method, a system, or a computer program product. Therefore, the present invention may be implemented in a form of a complete hardware embodiment, a complete software embodiment, or an embodiment combining software and hardware. Moreover, the present invention may be in the form of a computer program product implemented on one or more computer usable storage media (including, but not limited to, a magnetic disk memory, a CD-ROM, an optical memory and the like) including computer usable program codes.

The present invention is described with reference to flowcharts and/or block diagrams of the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided to a general-purpose computer, a special-purpose computer, an embedded processor, or a processor of another programmable data processing device to generate a machine, so that the instructions executed by the computer or the processor of another programmable data processing device generate an apparatus configured to implement a specified function in one or more processes in the flowcharts and/or in one or more blocks in the block diagrams.

These computer program instructions may also be stored in a computer-readable memory that can guide a computer or another programmable data processing device to work in a particular manner, such that the instructions stored in the computer-readable memory generate an article of manufacture that includes an instruction apparatus. The instruction apparatus implements a function specified in one or more processes in the flowcharts and/or in one or more blocks in the block diagrams.

These computer program instructions may also be loaded onto a computer or another programmable data processing device, such that a series of operation steps are performed on the computer or another programmable device, thus generating computer-implemented processing. Therefore, the instructions executed on the computer or another programmable device provide steps for implementing a function specified in one or more processes in the flowcharts and/or in one or more blocks in the block diagrams.

In a typical configuration, the computing device includes one or more central processing units (CPUs), an input/output interface, a network interface, and a memory.

The memory may include computer-readable media such as a volatile memory, a Random Access Memory (RAM), and/or a non-volatile memory, e.g., a Read-Only Memory (ROM) or a flash RAM. The memory is an example of a computer-readable medium.

The computer-readable medium includes permanent and non-permanent media as well as movable and non-movable media, and may implement information storage by means of any method or technology. The information may be a computer-readable instruction, a data structure, and a module of a program or other data. An example of the storage medium of a computer includes, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this specification, the computer-readable medium does not include transitory media, such as a modulated data signal and a carrier.

It should be further noted that the terms "include," "comprise" or other variations thereof are intended to cover non-exclusive inclusion, so that a process, method, article or device including a series of elements not only includes the elements, but also includes other elements not clearly listed, or further includes elements inherent to the process, method, article or device. In the absence of more limitations, an element defined by "including a/an ..." does not exclude that the process, method, article or device including the element further has other identical elements.

This application may be described in a general context of a computer executable instruction executed by a computer, for example, a program module. Generally, the program module includes a routine, a program, an object, an assembly, a data structure, and the like for executing a specific task or implementing a specific abstract data type. This application may also be implemented in distributed computing environments. In the distributed computing environments, a task is executed by remote processing devices connected through a communications network. In the distributed computing environments, the program module may be located in local and remote computer storage media including a storage device.

Various embodiments in this specification are described progressively. The same or similar parts between the embodiments may be referenced to one another. In each embodiment, the part that is different from other embodiments is mainly described. Particularly, the system embodiment is described in a relatively simple manner because it is similar to the method embodiment, and for related parts, reference can be made to the parts described in the method embodiment.

The above description is merely embodiments of this application, and is not used to limit this application. For those skilled in the art, this application may have various alterations and changes. Any modification, equivalent replacement, improvement and the like made without departing from the spirit and principle of this application should be included in the scope of the claims of this application.

## Claims

1.  A dialog generation method, comprising:

    training a sequence to sequence (seq2seq)-based dialog model using a loss function comprising topic range constraint information; and
    generating a dialog using the trained dialog model.

2.  The method of claim 1, wherein before the training a seq2seq-based dialog model, the method further comprises:
    training a topic model using a dialog training corpus to obtain multiple first topic vectors each representing a topic.

3.  The method of claim 2, wherein the training a seq2seq-based dialog model using a loss function comprising topic range constraint information specifically comprises:

    inputting a training sequence into the seq2seq-based dialog model for processing to obtain various hidden-state output data output during the processing and an output sequence obtained after the processing;
    generating a second topic vector corresponding to the output sequence according to the various hidden-state output data;
    inputting the output sequence into the trained topic model for processing to obtain a first topic vector corresponding to the output sequence among the multiple first topic vectors;
    calculating a loss using the loss function comprising topic range constraint information according to the first and second topic vectors corresponding to the output sequence; and
    adjusting the dialog model according to the loss.

4.  The method of claim 3, wherein the generating a second topic vector corresponding to the output sequence according to the various hidden-state output data specifically comprises:

    pooling the various hidden-state output data; and
    inputting data obtained after the pooling into a multi-layer perceptron for processing to generate the second topic vector corresponding to the output sequence.

5.  The method of claim 3, wherein the calculating a loss using the loss function comprising topic range constraint information according to the first and second topic vectors corresponding to the output sequence specifically comprises:

    calculating a first similarity between the second topic vector corresponding to the output sequence and the first topic vector corresponding to the output sequence;
    calculating a second similarity between the second topic vector corresponding to the output sequence and an irrelevant topic vector, wherein the irrelevant topic vector is a vector in the multiple first topic vectors other than the first topic vector corresponding to the output sequence; and
    substituting the first similarity and the second similarity into the loss function comprising topic range constraint information to calculate the loss, wherein the topic range constraint information is a formula comprising parameters corresponding to the first similarity and the second similarity.

6.  A dialog generation apparatus, comprising:

    a training module training a sequence to sequence (seq2seq)-based dialog model using a loss function comprising topic range constraint information; and
    a generation module generating a dialog using the trained dialog model.

7.  The apparatus of claim 6, wherein before training the seq2seq-based dialog model, the training module further trains a topic model using a dialog training corpus to obtain multiple first topic vectors each representing a topic.

8. The apparatus of claim 7, wherein the training module training a seq2seq-based dialog model using a loss function comprising topic range constraint information specifically comprises:

the training module inputting a training sequence into the seq2seq-based dialog model for processing to obtain various hidden-state output data output during the processing and an output sequence obtained after the processing;
generating a second topic vector corresponding to the output sequence according to the various hidden-state output data;
inputting the output sequence into the trained topic model for processing to obtain a first topic vector corresponding to the output sequence among the multiple first topic vectors;
calculating a loss using the loss function comprising topic range constraint information according to the first and second topic vectors corresponding to the output sequence; and
adjusting the dialog model according to the loss.

9. The apparatus of claim 8, wherein the training module generating a second topic vector corresponding to the output sequence according to the various hidden-state output data specifically comprises:

the training module pooling the various hidden-state output data; and
inputting data obtained after the pooling into a multi-layer perceptron for processing to generate the second topic vector corresponding to the output sequence.

10. The apparatus of claim 8, wherein the training module calculating a loss using the loss function comprising topic range constraint information according to the first and second topic vectors corresponding to the output sequence specifically comprises:

the training module calculating a first similarity between the second topic vector corresponding to the output sequence and the first topic vector corresponding to the output sequence;
calculating a second similarity between the second topic vector corresponding to the output sequence and an irrelevant topic vector, wherein the irrelevant topic vector is a vector in the multiple first topic vectors other than the first topic vector corresponding to the output sequence; and
substituting the first similarity and the second similarity into the loss function comprising topic range constraint information to calculate the loss, wherein the topic range constraint information is a formula comprising parameters corresponding to the first similarity and the second similarity.

11. An electronic device, comprising:

at least one processor; and
a memory in communication connection with the at least one processor, wherein
the memory stores an instruction executable by the at least one processor, and when executed by the at least one processor, the instruction enables the at least one processor to:

train a sequence to sequence (seq2seq)-based dialog model using a loss function comprising topic range constraint information; and
generate a dialog using the trained dialog model.

S101

Train a sequence to sequence (seq2seq)-based dialog model using a loss function including topic range constraint information

S102

Generate a dialog using the trained dialog model

**FIG. 1**

y1   y2   y3   #Eos

x1   x2   x3   x4   x5        #Eos   y1   y2   y3

LSTM encoder                LSTM decoder

**FIG. 2**

**Irrelevant topic vector**    $T^{\theta}_{\overline{topic-id}}$

**First topic vector corresponding to Y**    $T^{\theta}_{topic-id}$

**Second topic vector corresponding to Y**

$S_t = Relevance\left(T^v, T^{\theta}_{topic-id}\right)$

$S_{\bar{t}} = Relevance\left(T^v, T^{\theta}_{\overline{topic-id}}\right)$

$Relevance\left(T^v, T^{\theta}\right) = Cosine\left(T^v, T^{\theta}\right)$

**Various first topic vectors**

MLP
(Multi-layer perceptron)

Average pooling

$Y_1$   $Y_2$   $Y_3$   $Y_4$   <Eos>

$X_1$   $X_2$   $X_3$   $X_4$   $X_5$

<Eos>   $Y_1$   $Y_2$   $Y_3$   $Y_4$

# FIG. 3

Train a topic model to obtain multiple first topic vectors

Determine a first topic vector corresponding to a reply word sequence Y according to the trained topic model

Perform pooling and MLP transformation operations on various hidden-state output data during processing in the dialog model corresponding to Y, thus obtaining a second topic vector corresponding to Y

Calculate a first similarity between the second topic vector corresponding to Y and the first topic vector corresponding to Y and a second similarity between the second topic vector corresponding to Y and an irrelevant topic vector

Substitute the first similarity and the second similarity into a loss function including a topic range constraint function to calculate a loss, and adjust the dialog model according to the loss

**FIG. 4**

501          502

Training module     Generation module

**FIG. 5**

## INTERNATIONAL SEARCH REPORT

| International application No. |
| --- |
| **PCT/CN2018/090138** |

| A. | CLASSIFICATION OF SUBJECT MATTER |
| --- | --- |
| | G06F 17/30(2006.01)i |

According to International Patent Classification (IPC) or to both national classification and IPC

| B. | FIELDS SEARCHED |
| --- | --- |

Minimum documentation searched (classification system followed by classification symbols)

    G06F17/-

Documentation searched other than minimum documentation to the extent that such documents are included in the fields searched

Electronic data base consulted during the international search (name of data base and, where practicable, search terms used)

    CNABS, CNTXT, CNKI, VEN, USTXT, EPTXT, WOTXT: 对话, 话题, 损失函数, 模型, 训练, 向量, 池化, dialog, dialogue, loss function, model, training, vector, pooling

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 107368524 A (ALIBABA GROUP HOLDING LIMITED) 21 November 2017 (2017-11-21)<br>    entire document | 1-11 |
| X | CN 103544337 A (GM GLOBAL TECHNOLOGY OPERATIONS LLC) 29 January 2014 (2014-01-29)<br>    description, paragraphs 155 and 160-161 | 1-2, 6-7, 11 |
| X | US 7664644 B1 (AT & T INTELLECTUAL PROPERTY II, L.P.) 16 February 2010 (2010-02-16)<br>    claim 1, and description, column 2, lines 56-67 and columns 3-4 | 1-2, 6-7, 11 |
| A | CN 106682734 A (SHENZHEN INSTITUTES OF ADVANCED TECHNOLOGY, CHINESE ACADEMY OF SCIENCES) 17 May 2017 (2017-05-17)<br>    entire document | 1-11 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 August 2018** | **31 August 2018** |

| Name and mailing address of the ISA/CN | Authorized officer |
| --- | --- |
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/090138**

| Patent document cited in search report | | | Publication date (day/month/year) | Patent family member(s) | | | Publication date (day/month/year) |
|---|---|---|---|---|---|---|---|
| CN | 107368524 | A | 21 November 2017 | None | | | |
| CN | 103544337 | A | 29 January 2014 | US | 2013325483 | A1 | 05 December 2013 |
| | | | | DE | 102013209778 | A1 | 05 December 2013 |
| US | 7664644 | B1 | 16 February 2010 | None | | | |
| CN | 106682734 | A | 17 May 2017 | None | | | |

Form PCT/ISA/210 (patent family annex) (January 2015)